# EUROPEAN PATENT APPLICATION

(11) **EP 4 586 730 A1**
(43) Date of publication of application: **16.07.2025**
(21) Application number: 24829356.5
(22) Date of filing: 29.11.2024
(51) Int. Cl.: H04W 74/0808, H04W 72/0453, H04W 72/53, H04W 74/00, H04W 52/02, H04L 27/26, H04L 5/00, H04W 84/12

(54) **ELECTRONIC DEVICE FOR PERFORMING ALLOCATION OF RESOURCE UNIT AND/OR PREAMBLE PUNCTURING ON BASIS OF OCCUPANCY RATE OF CHANNEL, AND OPERATION METHOD OF ELECTRONIC DEVICE**

(30) Priority: 29.11.2023 KR 20230169322; 22.12.2023 KR 20230189099
(71) Applicant: Samsung Electronics Co., Ltd, Suwon-si, Gyeonggi-do 16677 (KR)
(72) Inventor: KIM, Minsoo, Suwon-si, Gyeonggi-do 16677 (KR)
(74) Representative: Gulde & Partner
(86) International application number: PCT/KR2024/019355
(87) International publication number: WO 2025/116638

(57) **Abstract**

In an electronic device and an operation method of an electronic device according to an embodiment, the electronic device may include a communication circuit configured to exchange data with an AP through short-range wireless communication. The electronic device may include a processor. The electronic device may include a memory. The memory may store an instruction, when executed by the processor, causing the electronic device to identify a first utilization of at least one channel, while the communication circuit operates in a power save mode. The memory may store an instruction to broadcast a clear-to-send (CTS) frame, while the communication circuit operates in a normal mode. The memory may store an instruction to identify a second utilization of the at least one channel, after the broadcasting of the CTS frame. The memory may store an instruction to, based on a difference between the first utilization and the second utilization, determine a third utilization of the at least one channel, caused by signal transmission and/or reception through the short-range wireless communication. The memory may store an instruction to transmit, to the AP (210), a frame including a setting set based on the first utilization, the second utilization, and/or the third utilization and associated with allocation of at least some resource units among multiple resource units and/or preamble puncturing. Various other embodiments are possible.

## Description

### [Technical Field]

Various embodiments of the disclosure relate to an electronic device and an operation method of an electronic device and to a technology of allocating a resource unit and/or performing preamble puncturing based on a channel utilization.

### [Background Art]

In accordance with the spread of various electronic devices, speed improvements with respect to wireless communication used by various electronic devices have been implemented. IEEE 802.11 WLAN (or Wi-Fi) among recent wireless communication supported by electronic devices is a standard designed to implement high-speed wireless connectivity across various electronic devices. While the first Wi-Fi implemented supported transmission rates of 1-9 Mbps, Wi-Fi 6 technology (or IEEE 802.11ax) may support transmission rates of up to about 10 Gbps.

An electronic device may support, through wireless communication supporting high transmission rates, various services (e.g., UHD quality video streaming services, augmented reality (AR) services, virtual reality (VR) services, and/or mixed reality (MR) services) using relatively large amounts of data and may support various other services.

The electronic device may support various technologies to improve transmission rate and/or reception rates of short-range wireless communication. In case that some of frequency bands supported by a basic service set (BSS) including the electronic device have a large utilization (or congestion), the electronic device may support a multiple resource unit (MRU) corresponding to a technology for allowing allocation of some resource units among multiple resource units to achieve data transmission and/or reception through a frequency band excluding some frequency bands, and a preamble puncturing technology for allowing data transmission and/or reception through a frequency band excluding a specific frequency band.

### [Disclosure of Invention]

### [Technical Problem]

A multiple resource unit (MRU) which is a technology for allowing allocation of some resource units among multiple resource units and a preamble puncturing technology which is a technology for data transmission and/or reception through a frequency band excluding a specific frequency band may be configured by an access point (AP) included in a basic service set (BSS). In case that a specific frequency band is congested, the AP may allocate a resource unit corresponding to another frequency band excluding the specific band to an electronic device configured to perform an STA function. Alternatively, in case that a specific frequency band is congested, the AP may control an electronic device configured to perform an STA function to perform data transmission and/or reception through another frequency band excluding the specific frequency band.

However, the AP may have difficulty identifying a state of the electronic device. As the number of electronic devices connected to the AP increases, it may be difficult to identify the state of each electronic device. Even though the electronic device connected to the AP is difficult to perform data transmission and/or reception through a specific frequency band, the AP may allocate a resource unit including the specific frequency band to the electronic device. Alternatively, even though the electronic device connected to the AP is difficult to perform data transmission and/or reception through a specific frequency band, the AP may not activate the preamble puncturing function for allowing data transmission and/or reception through a frequency band excluding the specific frequency band.

In this case, the electronic device may increase the time required for data transmission and/or reception through short-range wireless communication or fail in data transmission and/or reception.

The technical problems solved by the disclosure are not limited to the above technical problems and those skilled in the art will more clearly understand other technical problems from the following description.

### [Solution to Problem]

An electronic device according to an embodiment may include a communication circuit configured to exchange data with an AP through short-range wireless communication. The electronic device may include a processor. The electronic device may include a memory. The memory may store an instruction, when executed by the processor, causing the electronic device to identify a first utilization of at least one channel, according to entry into a power save mode. The memory may store an instruction to broadcast a clear-to-send (CTS) frame after the power save mode is released. The memory may store an instruction to identify a second utilization of the at least one channel, after the broadcasting of the CTS frame. The memory may store an instruction to, based on a difference between the first utilization and the second utilization, determine a third utilization of the at least one channel, caused by signal transmission and/or reception through the short-range wireless communication. The memory may store an instruction to transmit, to the AP (210), a frame including a setting associated with allocation of at least some resource units among multiple resource units and/or preamble puncturing, wherein the setting is set based on the first utilization, the second utilization, and/or the third utilization.

An operation method of an electronic device according to an embodiment may include an operation of identifying a first utilization of at least one channel, according to entry into a power save mode. The operation method of the electronic device may include an operation of broadcasting a clear-to-send (CTS) frame after the power save mode is deactivated. The operation method of the electronic device may include an operation of identifying a second utilization of the at least one channel, after the broadcasting of the CTS frame. The operation method of the electronic device may include an operation of determining a third utilization for signal transmission through the short-range wireless communication, based on a difference between the first utilization and the second utilization. The operation method of the electronic device may include an operation of performing a setting associated with allocation of at least some resource units among multiple resource units and/or preamble puncturing, based on the first utilization, the second utilization, and/or the third utilization. The operation method of the electronic device may include an operation of transmitting a frame including the setting associated with performing of the allocation of at least some resource units and/or the preamble puncturing to the AP connected to the electronic device.

### [Advantageous Effects of Invention]

An electronic device and an operation method of the electronic device according to an embodiment may identify a first utilization with respect to at least one channel according to entry into the power save mode and identify a second utilization with respect to at least one channel after the CTS frame is transmitted. The electronic device may determine a third utilization corresponding to a channel utilization caused by a signal transmitted through short-range wireless communication, based on a difference between the first utilization and the second utilization. The electronic device may perform a setting for allocation of a source unit, based on the third utilization and perform a setting for preamble puncturing, based on the second utilization. The electronic device may perform a setting for the allocation of a source unit and/or the preamble puncturing, based on a channel utilization measured the electronic device and transmit the setting for the allocation of a source unit and/or the preamble puncturing to an AP, thus inducing the AP to set the allocation of a source unit and/or the preamble puncturing by considering a state of the electronic device. Therefore, the electronic device may perform data transmission and/or reception through an appropriate resource unit or an appropriate frequency band so as to improve performance of the short-range wireless communication.

It will be appreciated by a person skilled in the art that effects which may be achieved from the disclosure are not limited to the effects described above and other effects that are not described above will be clearly understood from the following detailed description.

### [Brief Description of Drawings]

FIG. 1 is a block diagram of an electronic device according to various embodiments of the disclosure.
FIG. 2A is a diagram illustrating a wireless LAN system according to an embodiment.
FIG. 2B is a diagram illustrating an example of allocating some resource units among multiple resource units in a wireless LAN system according to an embodiment.
FIG. 2C is a diagram illustrating an example of performing preamble puncturing in a wireless LAN system according to an embodiment.
FIG. 3 is a block diagram illustrating an electronic device according to an embodiment.
FIG. 4A is a diagram illustrating an example of identifying a first utilization by an electronic device according to an embodiment.
FIG. 4B is a diagram illustrating an example of identifying a second utilization by an electronic device according to an embodiment.
FIG. 5A is a diagram illustrating an example of allocating a resource unit by an electronic device, based on a second utilization and/or a third utilization according to an embodiment.
FIG. 5B is a diagram illustrating an example of setting preamble puncturing by an electronic device, based on a second utilization and/or a third utilization according to an embodiment.
FIG. 5C is a diagram illustrating an example of setting resource unit allocation and preamble puncturing by an electronic device, based on a second utilization and/or a third utilization according to an embodiment.
FIG. 5D is a diagram illustrating an example of not setting resource unit allocation and preamble puncturing by an electronic device, based on a second utilization and/or a third utilization according to an embodiment.
FIG. 6 is an operation flowchart illustrating an operation method of an electronic device according to an embodiment.

### [Mode for the Invention]

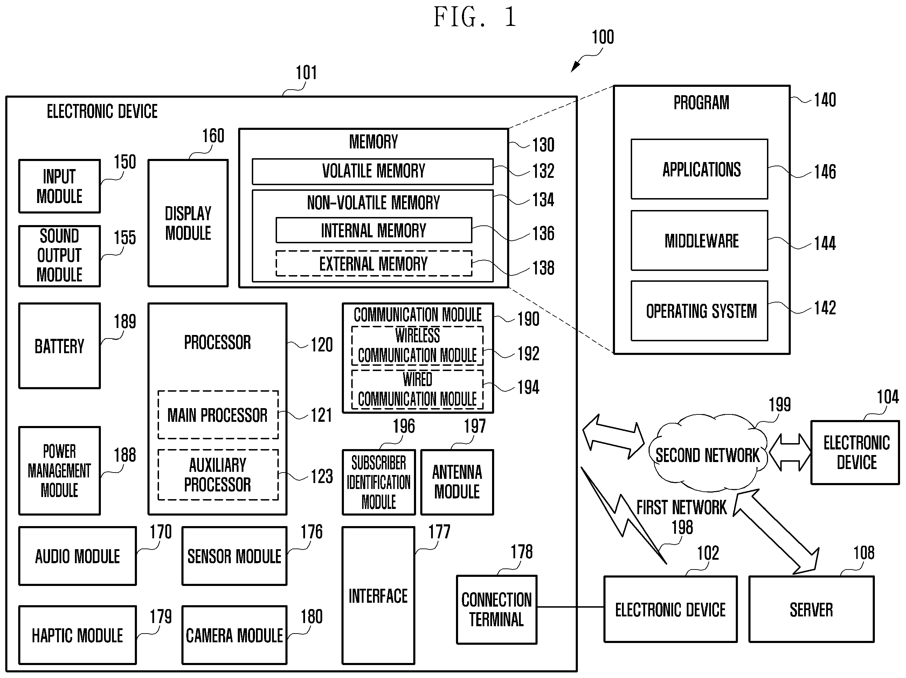

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

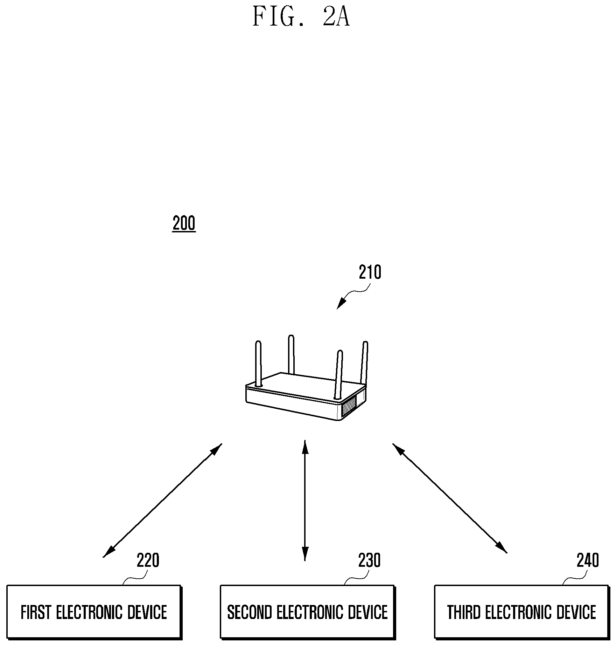

FIG. 2A is a diagram illustrating a wireless LAN system according to an embodiment.

The wireless LAN system 200 may include an access point (AP) 210, a first electronic device 210 (e.g., the electronic device 101 in FIG. 1), a second electronic device 220 (e.g., the electronic device 101 in FIG. 1), and/or a third electronic device 230 (e.g., the electronic device 101 in FIG. 1).

The AP 210 may correspond to an entity configured to provide connection with a data network. In case that the AP 210 supports short-range wireless communication, the AP 210 may function as an access point (AP) defined in IEEE 802.11. The AP 210 may be connected to the first electronic device 210, the second electronic device 220, and/or the third electronic device 230 through a wireless channel, and may provide data transmitted by the data network to the first electronic device 210, the second electronic device 220, and/or the third electronic device 230 through the wireless channel. The AP 210 may receive data transmitted by the first electronic device 210, the second electronic device 220, and/or the third electronic device 230 through the wireless channel, and transmit data to the data network.

The first electronic device 210, the second electronic device 220, and/or the third electronic device 230 may correspond to entities functioning as stations (STAs) in the wireless LAN system 200.

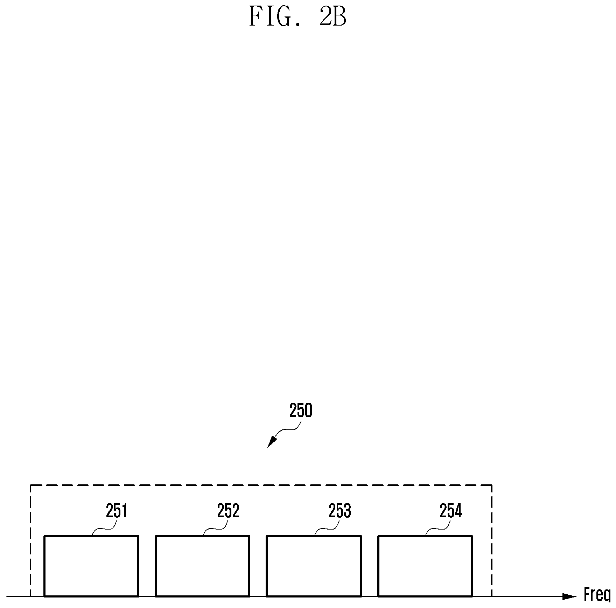

The AP 210 may support a multiple resource unit (MRU). The multiple resource unit (MRU) may refer to a technology for allocating at least some resource units among multiple resource units available in the wireless LAN system 200 to a STA (e.g., the first electronic device 210, the second electronic device 220, and/or the third electronic device 230) of the wireless LAN system 200. The AP 210 supporting the MRU may allocate multiple resource unit to a STA (e.g., the first electronic device 210, the second electronic device 220, and/or the third electronic device 230) of the wireless LAN system 200 and improve performance of the short-range communication of STAs. A detailed description for the MRU technology may be provided with reference to FIG. 2B below.

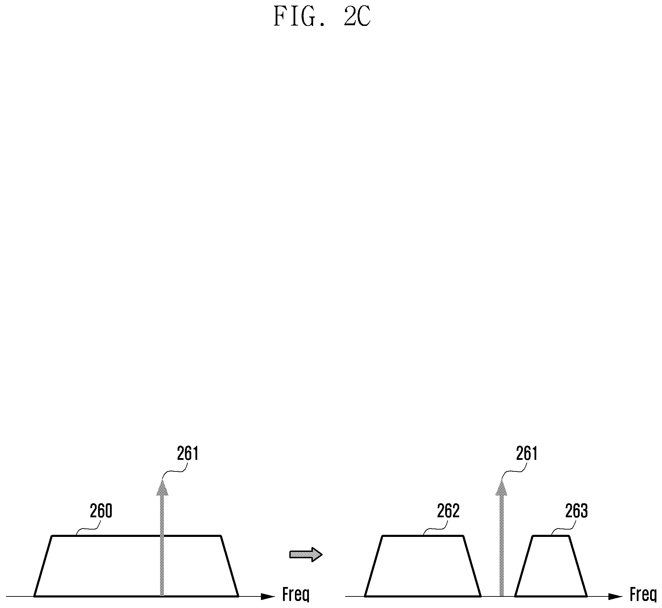

The AP 210 may support preamble puncturing. The preamble puncturing may refer to a technology for data transmission and/or reception through a frequency band excluding some frequency bands among frequency bands supported by the AP 210. The AP 210 supporting the preamble puncturing may control STAs to perform data transmission and/or reception through a frequency band excluding some frequency bands among frequency bands supported by the AP 210. A detailed description for the preamble puncturing may be provided with reference to FIG. 2C below.

FIG. 2B is a diagram illustrating an example of allocating some resource units among multiple resource units to an STA in a wireless LAN system according to an embodiment.

Referring to FIG. 2B, an AP (e.g., the AP 210 in FIG. 2A) may allocate at least some resource units among multiple resource units 250 available for the AP 210 (or available for a wireless LAN system (e.g., the wireless LAN system 200 in FIG. 2A)).

The AP 210 may support a multiple resource unit (MRU). The multiple resource unit (MRU) may refer to a technology for allocating at least some resource units among multiple resource units available in the wireless LAN system 200 to a STA (e.g., the first electronic device 210, the second electronic device 220, and/or the third electronic device 230) of the wireless LAN system 200.

A resource unit may refer to a unit of resources available for an STA (e.g., the first electronic device 210, the second electronic device 220, and/or the third electronic device 230) included in the wireless LAN system 200. For example, the resource unit may refer to a bandwidth of 20 MHz and/or a unit of resource that may be available during a specified time. Four resource units 251, 252, 253, and 254 are shown in FIG. 2B.

The AP 210 may allocate a certain resource unit 251 among multiple resource units 250 to the first electronic device 220. The first electronic device 220 may transmit data to the AP 210 and/or receive data from the AP 210 through the allocated resource unit 251.

The AP 210 may allocate a certain resource unit 252 among multiple resource units 250 to the second electronic device 230. The second electronic device 230 may transmit data to the AP 210 and/or receive data from the AP 210 through the allocated resource unit 252.

The AP 210 may allocate a certain resource unit 253 among multiple resource units 250 to the third electronic device 230. The third electronic device 240 may transmit data to the AP 210 and/or receive data from the AP 210 through the allocated resource unit 253.

The allocation of resource units may be performed by the AP 210. According to an embodiment, the AP 210 may allocate resources 251, 252, 253, and 254 to an STA (e.g., the first electronic device 220, the second electronic device 230, and/or the third electronic device 240) depending on a degree of usage of multiple resource units 250. For example, in case that the resource unit 251 is allocated to the first electronic device 220, the AP 210 may allocate another resource unit 252 to the second electronic device 230.

However, the AP 210 may have difficulty identifying a state of STAs (e.g., the first electronic device 220, the second electronic device 230, and/or the third electronic device 240) included in the wireless LAN system 200. According to an embodiment, the first electronic device 220 may have difficulty transmitting and/or receiving data through the resource unit 251 due to various reasons (e.g., a situation in which noise is received through a frequency band corresponding to the resource unit 251) but the AP 210 may not identify the state of the first electronic device 220 and allocate the resource unit 251 to the first electronic device 220.

The electronic device 220 may be configured to adapt its resource unit allocation based on channel utilization levels ranging from 40% to 90%, allowing for greater flexibility in handling both congested and under-utilized channels. In some embodiments, resource allocation or preamble puncturing may be triggered when the utilization exceeds a lower threshold of 50% or a higher threshold of 80%, depending on the network traffic conditions and overall system performance requirements. This ensures that the system dynamically adapts to varying levels of congestion, improving both throughput and stability.

FIG. 2C is a diagram illustrating an example of performing preamble puncturing in a wireless LAN system according to an embodiment.

An AP (e.g., the AP 210 in FIG. 2A) may support preamble puncturing. The preamble puncturing may refer to a technology for data transmission and/or reception through a frequency band excluding some frequency bands among frequency bands supported by the AP 210.

In case that a noise signal 261 having a certain frequency band among frequency bands 260 (e.g., a channel having a bandwidth of 160 MHz) supported by the AP 210, the AP 210 (or the first electronic device 220, the second electronic device 230, and/or the third electronic device 240) may transmit and/or receive data through a channel (e.g., a channel having a bandwidth of 80 MHz) excluding a frequency band (e.g., a channel having a bandwidth of 80 MHz) including the noise signal 261. However, a size of the frequency band of the noise signal 261 is often smaller than a size (e.g., 80 MHz) of the frequency band of the channel and a wireless LAN system (e.g., the wireless LAN system in FIG. 2A) may waste available frequency bands.

The AP 210 may activate the preamble puncturing and transmit and/or receive data through another frequency band 262 or 263 excluding the noise signal 261, so as to effectively use a resource unit available for the wireless LAN system 200.

The activation of the preamble puncturing may be performed by the AP 210. According to an embodiment, the AP 210 may activate the preamble puncturing function and cause STAs (e.g., the first electronic device 210, the second electronic device 220, and/or the third electronic device 230) connected to the AP 210 to use another frequency band 262 or 263 excluding the frequency band of the noise signal 261.

However, the AP 210 may have difficulty identifying a state of STAs (e.g., the first electronic device 220, the second electronic device 230, and/or the third electronic device 240) included in the wireless LAN system 200. According to an embodiment, in a situation in which the first electronic device 220 receives a noise signal through a partial frequency band 261 of the allocated frequency band 260, the AP 210 may have difficulty identify the state of the first electronic device 220 and may not activate the preamble puncturing function. In case that the preamble puncturing function is not activated, the first electronic device 220 may not transmit and/or receive data through the partial frequency band 263, thus reducing performance of the short-range wireless communication.

Hereinafter, a description will be given of an example in which an electronic device (e.g., the first electronic device 220 in FIG. 2A) connected to the AP 210 identifies a utilization (or congestion) of at least one channel, perform a setting associated with allocation of at least some resource units and/or preamble puncturing, based on the utilization of the channel, and transmits a frame including the setting to the AP, so as to perform the allocation of resource units and/r the preamble puncturing by considering a state of the electronic device 220.

The preamble puncturing operation may be performed independently of other channel utilization features. Specifically, preamble puncturing may be triggered when a certain interference threshold is detected, such as when the signal-to-noise ratio SNR falls below a predefined level (e.g., an SNR of 10 dB or lower), irrespective of other utilization conditions. This ensures reliable communication in environments where certain frequency bands experience higher noise or interference without requiring full channel utilization monitoring.

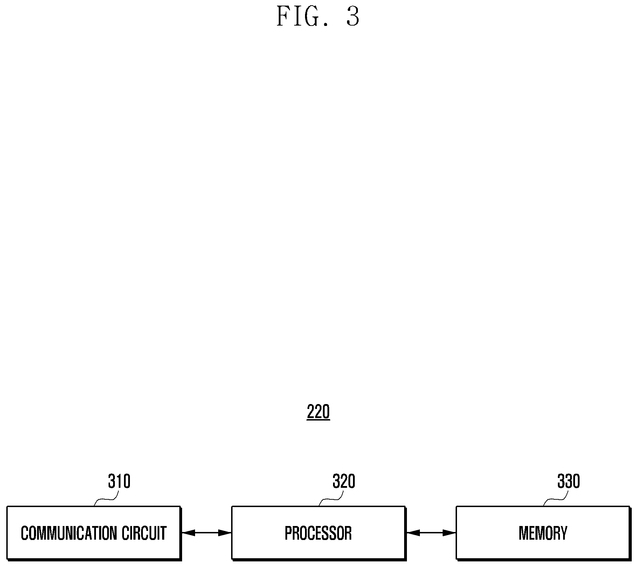

FIG. 3 is a block diagram illustrating an electronic device according to an embodiment.

The electronic device (e.g., the first electronic device 220 in FIG. 2A) may include a communication circuit (e.g., the wireless communication module 192 in FIG. 1) 310, a processor (e.g., the processor 120 in FIG. 1) 320, and/or a memory 330.

The communication circuit 310 may include various circuit structures used for modulation and/or demodulation of signals in the electronic device 220. For example, the communication circuit 310 may perform modulation into a signal in a radio frequency (RF) to output a signal in a baseband through an antenna (not shown) or demodulation of a signal in an RF band received through the antenna and transmit the signal to the processor 320.

The communication circuit 310 may transmit multiple packets to an AP (e.g., the AP 210 in FIG. 2A) or receive data transmitted by the AP 210, through the short-range wireless communication.

The processor 320 may be operatively connected to the communication circuit 310 and control operations of the communication circuit 310. The processor 320 may control the communication circuit 310 to transmit or receive a packet corresponding to the data. The data may correspond to data associated with a service being executed on the electronic device 220. For example, in case that a video call service is being executed on the electronic device 220, the data may correspond to data (e.g., voice data and video data) associated with the video call service.

The memory 330 may store an instruction that may be performed by the processor 320. Hereinafter, operations of the processor 320 to be described below may be performed according to execution of an instruction stored in the memory 330.

The processor 320 may identify a utilization of each of at least one channel which may be provided by an AP (e.g., the AP 210 in FIG. 2A). The utilization of each of the at least one channel may correspond to a value associated with a length of time for which the electronic device 220 may not transmit data through the at least one channel. According to an embodiment, the utilization of each of the at least one channel may be defined as a ratio of a time (e.g., a busy time) for which a signal transmitted (or received) through the at least one channel is detected to a time (e.g., radio on time) required for identifying a utilization of a channel.

The electronic device 220 (or the processor 320) may identify the utilization of each of the at least one channel by using at least two methods.

The processor 320 may identify a first utilization of at least one channel, according to the communication circuit 310 having entered a power save mode.

The communication circuit 310 may support the power save mode to reduce power consumption caused by performing short-range wireless communication by the communication circuit 310. The communication circuit 310 having activated the power save mode may not perform signal transmission and/or reception through short-range wireless communication to reduce power consumption caused by performing the short-range wireless communication. The processor 320 may control the communication circuit 310 to transmit a frame (or a signal or a message) indicating activation of the power save mode to the AP 210 to cause the communication circuit 310 to enter the power save mode. According to an embodiment, the processor 320 may configure a power management bit included in a QoS null frame as 1 (information indicating activation of the power save mode) and control the communication circuit 310 to transmit the QoS null frame to the AP 210.

The processor 320 may identify a first utilization of at least one channel, according to the communication circuit 310 having entered the power save mode. The processor 320 may identify the first utilization of at least one channel, while the communication circuit 310 operates in the power save mode. The processor 320 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the first utilization.

In case that the communication circuit 310 enters the power save mode (or the communication circuit 310 operates in the power save mode), the communication circuit 310 may not transmit a signal through the short-range wireless communication. Therefore, the first utilization may correspond to a utilization by a signal transmitted by other STAs (e.g., the second electronic device 230 and/or the third electronic device 240 in FIG 2A), excluding the electronic device 220, connected to the AP 210 and a signal through wireless communication (e.g., Bluetooth or cellular wireless communication) other than the short-range wireless communication.

The processor 320 may identify a second utilization corresponding to a utilization by a signal in wireless communication other than the short-range wireless communication. According to an embodiment, the processor 320 may release the power save mode (or deactivate the power save mode) and then transmit (or broadcast) a clear-to-send frame (CTS). In case that the power save mode is released, the communication circuit 310 may be switched to a normal mode. The normal mode may refer to a mode in which signal transmission and/or reception is performed through the short-range wireless communication. The communication circuit 310 may transmit (or broadcast) the CTS frame in the normal mode. The CTS frame may correspond to a frame indicating that data (or frame, signal, or message) transmission is possible. The CTS may include information (e.g., identification information of the electronic device 220) indicating an electronic device capable of performing data transmission and information indicating a length of a time for which electronic devices are required to stop data transmission.

The electronic device 220 may perform power save mode operations wherein the first utilization is identified without requiring a specific time window. The first utilization may be measured based on both short-range wireless communication signals and signals from other wireless communication systems, including but not limited to Bluetooth and LTE signals, irrespective of any data transmission to the Access Point AP 210. This allows the electronic device 220 to enter power save mode without depending on external data traffic, thus optimizing energy efficiency and channel monitoring even in non-active communication states.

Among the electronic devices having received the CTS frame, electronic devices excluding an electronic device corresponding to a destination of the CTS frame may not transmit data to the AP 210 for a designated time.

According to an embodiment, the CTS frame transmitted by the processor 320 may correspond to a CTS frame in which identification information of the electronic device 220 in included in information indicating electronic device capable of performing data transmission. Accordingly, in case that the processor 320 transmits the CTS frame, other electronic devices (e.g., the second electronic device 230 and/or the third electronic device 240 in FIG 2A) excluding the electronic device 220 may not transmit data to the AP 220 for the designated time included in the CTS frame.

The processor 320 may identify the second utilization of at least one channel, after transmitting the CTS frame. The processor 320 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the second utilization.

After the communication circuit 310 has transmitted the CTS frame, the second electronic device 230 and/or the third electronic device 240 may not transmit a signal through the short-range wireless communication. Therefore, the second utilization may correspond to a utilization by a signal through wireless communication (e.g., Bluetooth or cellular wireless communication) other than the short-range wireless communication.

The operation in which the processor 320 identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The processor 320 may determine (or identify or calculate) the third utilization corresponding to a channel utilization by a signal transmitted and/or received through the short-range wireless communication, based on the difference between the first utilization and the second utilization.

The processor 320 may identify the first utilization, the second utilization, and/or the third utilization of each of the at least one channel which may be provided by the AP 210. The processor 320 may identify the first utilization, the second utilization, and/or the third utilization and manage the identified utilizations through various methods. According to an embodiment, the processor 320 may manage the first utilization, the second utilization, and/or the third utilization through a table realized as Table 1 below.

**[Table 1]**

| | First channel | Second channel | Third channel |
|---|---|---|---|
| First utilization | 90% | 55% | 55% |
| Second utilization | 25% | 20% | 20% |
| Third utilization | 65% | 35% | 35% |

The processor 320 may perform a setting associated with an allocation function (or a multi resource unit (MRU) function) of some resource units among multiple resource units and/or the preamble puncturing function, based on the first utilization, the second utilization, and/or the third utilization.

According to an embodiment, the processor 320 may perform a setting associated with an allocation function of some resource units among multiple resource units, based on the third utilization (or with reference to the third utilization).

The processor 320 may identify a channel having a utilization greater than or equal to (or exceeding) a designated value (e.g., 60%) among third utilizations of at least one channel (e.g., a first channel, a second channel, and a third channel), and perform a setting associated with the allocation function of at least some source units among multiple resource units so that the electronic device 220 may perform data transmission and/or reception through other channels excluding the identified channel.

For example, the processor 320 may identify a channel having a utilization greater than or equal to (or exceeding) a designated value (e.g., 60%) among third utilizations of at least one channel (e.g., a first channel, a second channel, and a third channel), and perform a setting associated with the allocation function of at least some source units among multiple resource units so that another frequency band excluding a frequency band corresponding to the identified channel is allocated.

The processor 320 may perform the setting associated with the allocation function of at least some source units and control the communication circuit 310 to transmit, to the AP 210, a frame including the setting associated with the allocation of resource units. The frame including the setting associated with the allocation of source units may be realized as a frame (e.g., an operation mode indication (OMI) or operation mode notification (OMN)) configured to request changing of an operation mode of the short-range wireless communication. The setting associated with the allocation of source units may include information of resource units (or frequency bands) which the electronic device 220 needs to avoid allocating. According to an embodiment, the setting associated with the allocation of source units may include information indicating a channel having a utilization greater than or equal to (or exceeding) a designated value (e.g., 60%) among third utilizations of at least one channel (e.g., a first channel, a second channel, and a third channel) or information indicating a frequency band of the channel.

The processor 320 may use a method of transmitting a frame including the setting associated with the allocation of source units to the AP 210 so as to induce other resource units excluding the identified resource unit to be allocated to the electronic device 220. The processor 320 may cause the AP 210 to allocate other resource units excluding the identified resource unit (e.g., the resource unit having the third utilization having a value greater than or equal to a designated value) to the electronic device 220 so as to allow the electronic device 220 to perform the short-range wireless communication by using a resource unit having relatively better performance, thus improving performance of the short-range wireless communication.

The processor 320 may identify a channel having a utilization greater than or equal to (or exceeding) a designated value (e.g., 60%) among second utilizations of at least one channel (e.g., a first channel, a second channel, and a third channel), and perform a setting associated with the preamble puncturing so that the electronic device 220 may perform data transmission and/or reception through other channels excluding the identified channel.

The channel having a second utilization greater than or equal to (or exceeding) a designated value may correspond to a channel which may not provide high performance of the short-range wireless communication due to a signal or noise by wireless communication other than the short-range wireless communication. Accordingly, the processor 320 may identify the channel having a second utilization greater than or equal to (or exceeding) a designated value and request activation of the preamble puncturing function from the AP 210 to allow the short-range wireless communication through another frequency band excluding a frequency band corresponding to the identified channel.

The processor 320 may perform a setting associated with the preamble puncturing function. The setting associated with the preamble puncturing function may include setting whether the preamble puncturing function is activated and/or setting a frequency band to be excluded when the preamble puncturing function is activated. The processor 320 may perform the setting associated with the preamble puncturing function and control the communication circuit 310 to transmit, to the AP 210, a frame including the setting associated with the preamble puncturing function. The frame including the setting associated with the preamble puncturing function may be realized as a frame (e.g., an operation mode indication (OMI) or operation mode notification (OMN)) configured to request changing of an operation mode of the short-range wireless communication.

The processor 320 may use a method of transmitting a frame including the setting associated with the preamble puncturing function to the AP 210 so as to induce data transmission and/or reception to be performed through another frequency band other than the identified frequency band. In case that the AP 210 receives the frame including the setting associated with the preamble puncturing function and the preamble puncturing function is activated, the electronic device 220, the second electronic device 230, and/or the third electronic device 240 may transmit and/or receive data to and/or from the AP 210 through another frequency band other than the identified frequency band. Therefore, the processor 320 may perform the short-range wireless communication through another frequency band excluding the identified frequency band (e.g., the frequency band corresponding to the resource unit having the second utilization greater than or equal to a designated value) to allow the electronic device 220 to perform the short-range wireless communication by using a resource unit having relatively better performance, thus improving performance of the short-range wireless communication.

The processor 320 may perform both the setting associated with the allocation of at least some resource units and the setting associated with the preamble puncturing. For example, the processor 320 may control the communication circuit 310 to transmit, to the AP 210, a frame including the setting associated with the allocation of at least some resource units and the setting associated with the preamble puncturing. The processor 320 may induce another resource unit excluding the identified resource unit to be allocated to the electronic device 220 and induce data transmission and/or reception to be performed through another frequency band excluding the identified frequency band.

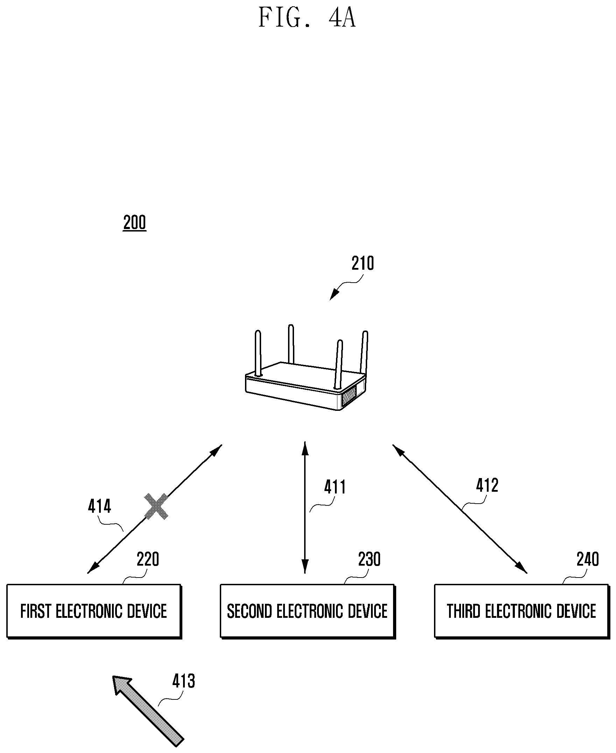

FIG. 4A is a diagram illustrating an example of identifying a first utilization by an electronic device according to an embodiment.

The electronic device 220 may identify a utilization of each of at least one channel which may be provided by an AP (e.g., the AP 210 in FIG. 2A). The utilization of each of the at least one channel may correspond to a value associated with a length of time for which the electronic device 220 may not transmit data through the at least one channel. According to an embodiment, the utilization of each of the at least one channel may be defined as a ratio of a time (e.g., a busy time) for which a signal transmitted (or received) through the at least one channel is detected to a time (e.g., radio on time) required for identifying a utilization of a channel.

The electronic device 220 may identify a first utilization of at least one channel, according to the communication circuit 310 having entered a power save mode.

The communication circuit 310 may support the power save mode to reduce power consumption caused by performing short-range wireless communication by the communication circuit 310. The communication circuit 310 having activated the power save mode may not perform signal transmission and/or reception through short-range wireless communication to reduce power consumption caused by performing the short-range wireless communication. The electronic device 220 may control the communication circuit 310 to transmit a frame (or a signal or a message) indicating activation of the power save mode to the AP 210 to cause the communication circuit 310 to enter the power save mode. According to an embodiment, the electronic device 220 may configure a power management bit included in a QoS null frame as 1 (information indicating activation of the power save mode) and control the communication circuit 310 to transmit the QoS null frame to the AP 210.

The electronic device 220 may identify a first utilization of at least one channel, according to the communication circuit 310 having entered the power save mode. The electronic device 220 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the first utilization.

In case that the communication circuit 310 enters the power save mode, the communication circuit 310 may not transmit a signal 414 through the short-range wireless communication.

Therefore, the first utilization may correspond to a utilization by a signal 411 or 412 transmitted by other STAs (e.g., the second electronic device 230 and/or the third electronic device 240 in FIG 2A), excluding the electronic device 220, connected to the AP 210 and a signal 413 through wireless communication (e.g., Bluetooth or cellular wireless communication) other than the short-range wireless communication.

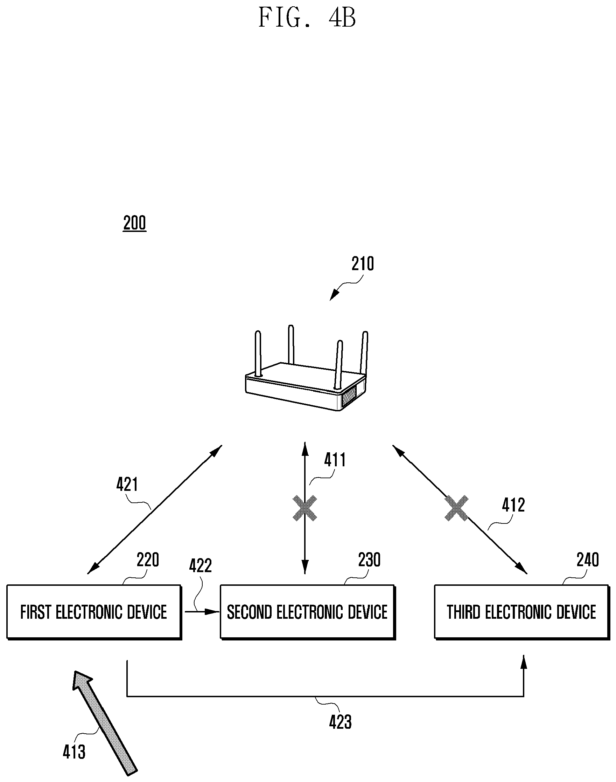

FIG. 4B is a diagram illustrating an example of identifying a second utilization by an electronic device according to an embodiment.

The electronic device 220 may identify a utilization of each of at least one channel which may be provided by an AP (e.g., the AP 210 in FIG. 2A). The utilization of each of the at least one channel may correspond to a value associated with a length of time for which the electronic device 220 may not transmit data through the at least one channel. According to an embodiment, the utilization of each of the at least one channel may be defined as a ratio of a time (e.g., a busy time) for which a signal transmitted (or received) through the at least one channel is detected to a time (e.g., radio on time) required for identifying a utilization of a channel.

The electronic device 220 may identify a second utilization corresponding to a utilization by a signal in wireless communication other than the short-range wireless communication. According to an embodiment, the electronic device 220 may release the power save mode (or deactivate the power save mode) and then transmit (or broadcast) a clear-to-send frame (CTS) 421, 422, or 423. The CTS frame 421, 422, of 423 may correspond to a frame indicating that data (or frame, signal, or message) transmission is possible. The CTS may include information (e.g., identification information of the electronic device 220) indicating an electronic device capable of performing data transmission and information indicating a length of a time for which electronic devices are required to stop data transmission.

Among the electronic devices (e.g., the AP 210, the second electronic device 230, and the third electronic device 240) having received the CTS frames 421, 422, and 423, electronic devices (e.g., the second electronic device 230 and the third electronic device 240) excluding an electronic device (e.g., the electronic device 220) corresponding to a destination of the CTS frames 421, 422, and 423 may not transmit data 411 or 412 to the AP 210 for a designated time.

Additionally, the electronic device 220 may broadcast a CTS frame 421 in specific conditions where high channel utilization is detected, without being limited to identifying second utilization or preamble puncturing. This broadcast ensures that other electronic devices 230, 240 connected to the AP 210 refrain from transmitting data, allowing the electronic device 220 to accurately measure channel conditions without interference from local wireless traffic. The CTS frame 421 may also be used to signal an intention to enter a different operational mode or indicate future communication requirements.

According to an embodiment, the CTS frame 421, 422, or 423 transmitted by the electronic device 220 may correspond to a CTS frame in which identification information of the electronic device 220 in included in information indicating electronic device capable of performing data transmission. Accordingly, in case that the electronic device 220 transmits the CTS frame 421, 422, or 423, other electronic devices (e.g., the second electronic device 230 and/or the third electronic device 240 in FIG 2A) excluding the electronic device 220 may not transmit data 411 or 412 to the AP 220 for the designated time included in the CTS frame.

The electronic device 220 may identify the second utilization of at least one channel, after transmitting the CTS frame. The electronic device 220 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the second utilization.

After the communication circuit 310 has transmitted the CTS frame, the second electronic device 230 and/or the third electronic device 240 may not transmit a signal through the short-range wireless communication. Therefore, the second utilization may correspond to a utilization by a signal through wireless communication (e.g., Bluetooth or cellular wireless communication) other than the short-range wireless communication.

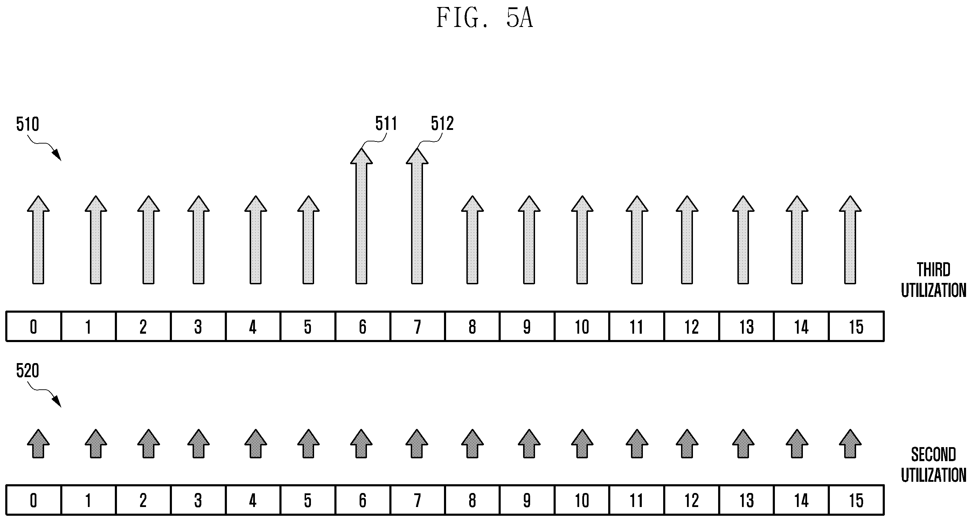

FIG. 5A is a diagram illustrating an example of allocating a resource unit by an electronic device, based on a second utilization and/or a third utilization according to an embodiment.

The operation in which an electronic device (e.g., the electronic device 220 in FIG. 3) identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The electronic device 220 may determine (or identify or calculate) the third utilization corresponding to a channel utilization by a signal transmitted and/or received through the short-range wireless communication, based on the difference between the first utilization and the second utilization.

The electronic device 220 may identify the first utilization, the second utilization, and/or the third utilization of each of the at least one channel which may be provided by the AP 210. The electronic device 220 may identify the first utilization, the second utilization, and/or the third utilization and manage the identified utilizations through various methods.

FIG. 5A illustrates the second utilization 520 and the third utilization 510 of each of at least one channel. Arrows shown in FIG. 5A represent the second utilization 520 and the third utilization 510 and the longer the arrow, the greater the size of the second utilization 520 and/or the third utilization 510.

FIG. 5A illustrates that the electronic device 220 identifies the second utilization 520 and the third utilization 510 of each of 16 channels (e.g., channel 0, channel 1, channel 2, channel 3, channel 4, channel 5, channel 6, channel 7, channel 8, channel 9, channel 10, channel 11, channel 12, channel 13, channel 14, and channel 15).

Referring to FIG. 5A, it may be identified that the third utilizations 511 and 512 of specific channels (e.g., channel 6 and channel 7) are greater than the third utilizations of other channels.

The electronic device 220 may identify a channel (e.g., channel 6 or channel 7) having a utilization greater than or equal to (or exceeding) a designated value (e.g., 60%) among third utilizations of at least one channel (e.g., channel 0, channel 1, channel 2, channel 3, channel 4, channel 5, channel 6, channel 7, channel 8, channel 9, channel 10, channel 11, channel 12, channel 13, channel 14, and channel 15), and perform a setting associated with the allocation function of at least some source units among multiple resource units so that the electronic device 220 may perform data transmission and/or reception through other channels excluding the identified channel (e.g., channel 6 or channel 7).

The electronic device 220 may perform the setting associated with the allocation function of at least some source units and control the communication circuit 310 to transmit, to the AP 210, a frame including the setting associated with the allocation of resource units. The frame including the setting associated with the allocation of source units may be realized as a frame (e.g., an operation mode indication (OMI) or operation mode notification (OMN)) configured to request changing of an operation mode of the short-range wireless communication. The setting associated with the allocation of source units may include information of resource units (or frequency bands) which the electronic device 220 needs to avoid allocating. According to an embodiment, the setting associated with the allocation of source units may include information indicating a channel (e.g., channel 6 or channel 7) having a utilization greater than or equal to (or exceeding) a designated value (e.g., 60%) among third utilizations of at least one channel (e.g., channel 0, channel 1, channel 2, channel 3, channel 4, channel 5, channel 6, channel 7, channel 8, channel 9, channel 10, channel 11, channel 12, channel 13, channel 14, and channel 15) or information indicating a frequency band of the channel.

The electronic device 220 may use a method of transmitting a frame including the setting associated with the allocation of source units to the AP 210 so as to induce other resource units excluding the identified resource unit to be allocated to the electronic device 220. The electronic device 220 may cause the AP 210 to allocate other resource units excluding the identified resource unit (e.g., the resource unit having the third utilization having a value greater than or equal to a designated value) to the electronic device 220 so as to allow the electronic device 220 to perform the short-range wireless communication by using a resource unit having relatively better performance, thus improving performance of the short-range wireless communication.

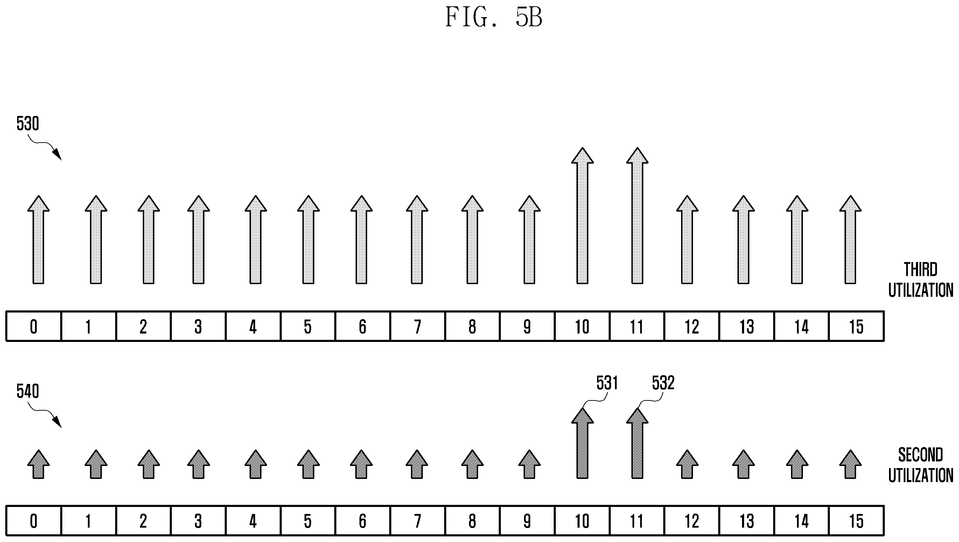

FIG. 5B is a diagram illustrating an example of setting preamble puncturing by an electronic device, based on a second utilization and/or a third utilization according to an embodiment.

The operation in which an electronic device (e.g., the electronic device 220 in FIG. 3) identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The electronic device 220 may determine (or identify or calculate) the third utilization corresponding to a channel utilization by a signal transmitted and/or received through the short-range wireless communication, based on the difference between the first utilization and the second utilization.

The electronic device 220 may identify the first utilization, the second utilization, and/or the third utilization of each of the at least one channel which may be provided by the AP 210. The electronic device 220 may identify the first utilization, the second utilization, and/or the third utilization and manage the identified utilizations through various methods.

FIG. 5B illustrates the second utilization 540 and the third utilization 530 of each of at least one channel. Arrows shown in FIG. 5B represent the second utilization 540 and the third utilization 530 and the longer the arrow, the greater the size of the second utilization 540 and/or the third utilization 530.

FIG. 5B illustrates that the electronic device 220 identifies the second utilization 530 and the third utilization 540 of each of 16 channels (e.g., channel 0, channel 1, channel 2, channel 3, channel 4, channel 5, channel 6, channel 7, channel 8, channel 9, channel 10, channel 11, channel 12, channel 13, channel 14, and channel 15).

Referring to FIG. 5B, it may be identified that the second utilizations 541 and 542 of specific channels (e.g., channel 10 and channel 11) are greater than the second utilizations of other channels.

The electronic device 220 may identify a channel (e.g., channel 10 or channel 11) having a utilization greater than or equal to (or exceeding) a designated value (e.g., 60%) among second utilizations of at least one channel (e.g., channel 0, channel 1, channel 2, channel 3, channel 4, channel 5, channel 6, channel 7, channel 8, channel 9, channel 10, channel 11, channel 12, channel 13, channel 14, and channel 15), and perform a setting associated with the preamble puncturing so that the electronic device 220 may perform data transmission and/or reception through other channels excluding the identified channel.

The channel (e.g., channel 10 or channel 11) having a second utilization greater than or equal to (or exceeding) a designated value may correspond to a channel which may not provide high performance of the short-range wireless communication due to a signal or noise by wireless communication other than the short-range wireless communication. Accordingly, the electronic device 220 may identify the channel (e.g., channel 10 or channel 11) having a second utilization greater than or equal to (or exceeding) a designated value and request activation of the preamble puncturing function from the AP 210 to allow the short-range wireless communication through another frequency band excluding a frequency band corresponding to the identified channel.

The electronic device 220 may perform a setting associated with the preamble puncturing function. The setting associated with the preamble puncturing function may include setting whether the preamble puncturing function is activated and/or setting a frequency band to be excluded when the preamble puncturing function is activated. The electronic device 220 may perform the setting associated with the preamble puncturing function and control the communication circuit 310 to transmit, to the AP 210, a frame including the setting associated with the preamble puncturing function. The frame including the setting associated with the preamble puncturing function may be realized as a frame (e.g., an operation mode indication (OMI) or operation mode notification (OMN)) configured to request changing of an operation mode of the short-range wireless communication.

The electronic device 220 may use a method of transmitting a frame including the setting associated with the preamble puncturing function to the AP 210 so as to induce data transmission and/or reception to be performed through another frequency band other than the identified frequency band. In case that the AP 210 receives the frame including the setting associated with the preamble puncturing function and the preamble puncturing function is activated, the electronic device 220, the second electronic device 230, and/or the third electronic device 240 may transmit and/or receive data to and/or from the AP 210 through another frequency band other than the identified frequency band. Therefore, the electronic device 220 may perform the short-range wireless communication through another frequency band excluding the identified frequency band (e.g., the frequency band corresponding to the resource unit having the second utilization greater than or equal to a designated value) to allow the electronic device 220 to perform the short-range wireless communication by using a resource unit having relatively better performance, thus improving performance of the short-range wireless communication.

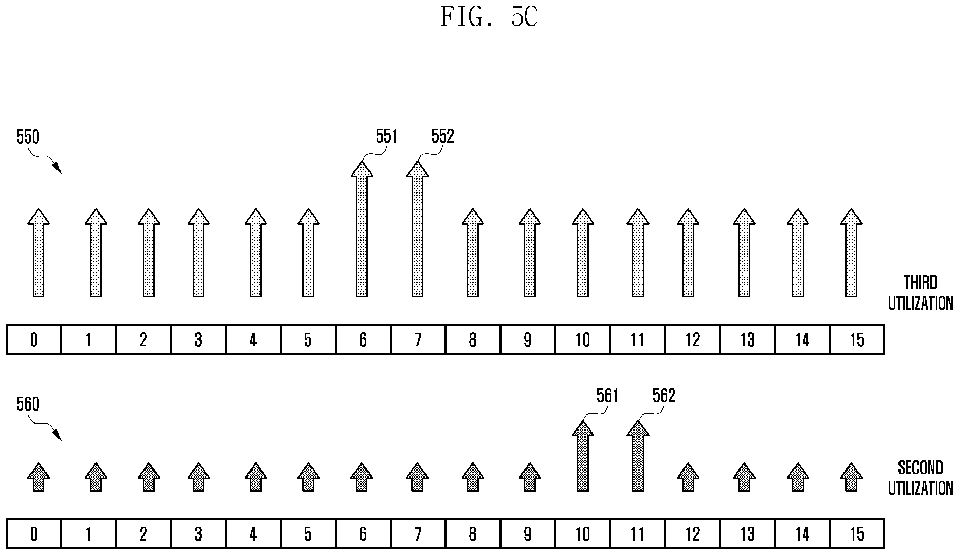

FIG. 5C is a diagram illustrating an example of setting resource unit allocation and preamble puncturing by an electronic device, based on a second utilization and/or a third utilization according to an embodiment.

The operation in which an electronic device (e.g., the electronic device 220 in FIG. 3) identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The electronic device 220 may determine (or identify or calculate) the third utilization corresponding to a channel utilization by a signal transmitted and/or received through the short-range wireless communication, based on the difference between the first utilization and the second utilization.

The electronic device 220 may identify the first utilization, the second utilization, and/or the third utilization of each of the at least one channel which may be provided by the AP 210. The electronic device 220 may identify the first utilization, the second utilization, and/or the third utilization and manage the identified utilizations through various methods.

FIG. 5C illustrates the second utilization 560 and the third utilization 550 of each of at least one channel. Arrows shown in FIG. 5C represent the second utilization 560 and the third utilization 550 and the longer the arrow, the greater the size of the second utilization 560 and/or the third utilization 550.

FIG. 5C illustrates that the electronic device 220 identifies the second utilization 550 and the third utilization 560 of each of 16 channels (e.g., channel 0, channel 1, channel 2, channel 3, channel 4, channel 5, channel 6, channel 7, channel 8, channel 9, channel 10, channel 11, channel 12, channel 13, channel 14, and channel 15).

Referring to FIG. 5C, it may be identified that the third utilizations 551 and 552 of specific channels (e.g., channel 5 and channel 6) are greater than the third utilizations of other channels.

The electronic device 220 may identify a channel (e.g., channel 5 or channel 6) having a utilization greater than or equal to (or exceeding) a designated value (e.g., 60%) among third utilizations of at least one channel (e.g., channel 0, channel 1, channel 2, channel 3, channel 4, channel 5, channel 5, channel 6, channel 8, channel 9, channel 10, channel 11, channel 12, channel 13, channel 14, and channel 15), and perform a setting associated with the allocation function of at least some source units among multiple resource units so that the electronic device 220 may perform data transmission and/or reception through other channels excluding the identified channel (e.g., channel 5 or channel 6).

The electronic device 220 may perform the setting associated with the allocation function of at least some source units and control the communication circuit 310 to transmit, to the AP 210, a frame including the setting associated with the allocation of resource units. The frame including the setting associated with the allocation of source units may be realized as a frame (e.g., an operation mode indication (OMI) or operation mode notification (OMN)) configured to request changing of an operation mode of the short-range wireless communication. The setting associated with the allocation of source units may include information of resource units (or frequency bands) which the electronic device 220 needs to avoid allocating. According to an embodiment, the setting associated with the allocation of source units may include information indicating a channel (e.g., channel 6 or channel 7) having a utilization greater than or equal to (or exceeding) a designated value (e.g., 60%) among third utilizations of at least one channel (e.g., channel 0, channel 1, channel 2, channel 3, channel 4, channel 5, channel 6, channel 7, channel 8, channel 9, channel 10, channel 11, channel 12, channel 13, channel 14, and channel 15) or information indicating a frequency band of the channel.

Referring to FIG. 5C, it may be identified that the second utilizations 561 and 562 of specific channels (e.g., channel 10 and channel 11) are greater than the second utilizations of other channels.

The electronic device 220 may identify a channel (e.g., channel 10 or channel 11) having a utilization greater than or equal to (or exceeding) a designated value (e.g., 60%) among second utilizations of at least one channel (e.g., channel 0, channel 1, channel 2, channel 3, channel 4, channel 5, channel 6, channel 7, channel 8, channel 9, channel 10, channel 11, channel 12, channel 13, channel 14, and channel 15), and perform a setting associated with the preamble puncturing so that the electronic device 220 may perform data transmission and/or reception through other channels excluding the identified channel.

The channel (e.g., channel 10 or channel 11) having a second utilization greater than or equal to (or exceeding) a designated value may correspond to a channel which may not provide high performance of the short-range wireless communication due to a signal or noise by wireless communication other than the short-range wireless communication. Accordingly, the electronic device 220 may identify the channel (e.g., channel 10 or channel 11) having a second utilization greater than or equal to (or exceeding) a designated value and request activation of the preamble puncturing function from the AP 210 to allow the short-range wireless communication through another frequency band excluding a frequency band corresponding to the identified channel.

The electronic device 220 may perform a setting associated with the preamble puncturing function. The setting associated with the preamble puncturing function may include setting whether the preamble puncturing function is activated and/or setting a frequency band to be excluded when the preamble puncturing function is activated. The electronic device 220 may perform the setting associated with the preamble puncturing function and control the communication circuit 310 to transmit, to the AP 210, a frame including the setting associated with the preamble puncturing function. The frame including the setting associated with the preamble puncturing function may be realized as a frame (e.g., an operation mode indication (OMI) or operation mode notification (OMN)) configured to request changing of an operation mode of the short-range wireless communication.

The electronic device 220 may perform both the setting associated with the allocation of at least some resource units and the setting associated with the preamble puncturing. For example, the electronic device 220 may control the communication circuit 310 to transmit, to the AP 210, a frame including the setting associated with the allocation of at least some resource units and the setting associated with the preamble puncturing. The electronic device 220 may induce another resource unit excluding the identified resource unit to be allocated to the electronic device 220 and induce data transmission and/or reception to be performed through another frequency band excluding the identified frequency band.

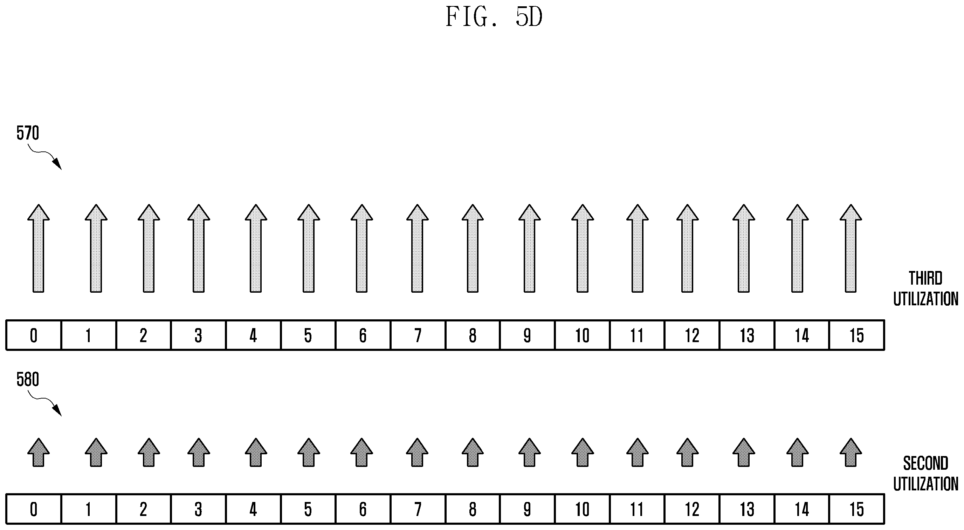

FIG. 5D is a diagram illustrating an example of not setting resource unit allocation and preamble puncturing by an electronic device, based on a second utilization and/or a third utilization according to an embodiment.

The operation in which an electronic device (e.g., the electronic device 220 in FIG. 3) identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The electronic device 220 may determine (or identify or calculate) the third utilization corresponding to a channel utilization by a signal transmitted and/or received through the short-range wireless communication, based on the difference between the first utilization and the second utilization.

The electronic device 220 may identify the first utilization, the second utilization, and/or the third utilization of each of the at least one channel which may be provided by the AP 210. The electronic device 220 may identify the first utilization, the second utilization, and/or the third utilization and manage the identified utilizations through various methods.

FIG. 5D illustrates the second utilization 580 and the third utilization 570 of each of at least one channel. Arrows shown in FIG. 5D represent the second utilization 580 and the third utilization 570 and the longer the arrow, the greater the size of the second utilization 580 and/or the third utilization 570.

FIG. 5D illustrates that the electronic device 220 identifies the second utilization 570 and the third utilization 580 of each of 16 channels (e.g., channel 0, channel 1, channel 2, channel 3, channel 4, channel 5, channel 6, channel 7, channel 8, channel 9, channel 10, channel 11, channel 12, channel 13, channel 14, and channel 15).

Referring to FIG. 5D, the second utilization and the third utilization of each of 16 channels (e.g., channel 0, channel 1, channel 2, channel 3, channel 4, channel 5, channel 6, channel 7, channel 8, channel 9, channel 10, channel 11, channel 12, channel 13, channel 14, and channel 15) may have sizes smaller than or equal to a designated size. In this case, the electronic device 220 may not perform the setting associated with the allocation of at least some resource units among multiple resource units and the setting associated with the preamble puncturing. The electronic device 220 may transmit and/or receive data through a frequency band corresponding to a resource unit which has been previously allocated by the AP 210, and in case that the preamble puncturing function is not activated, the electronic device may transmit and/or receive data through a frequency band not excluding a specific frequency band.

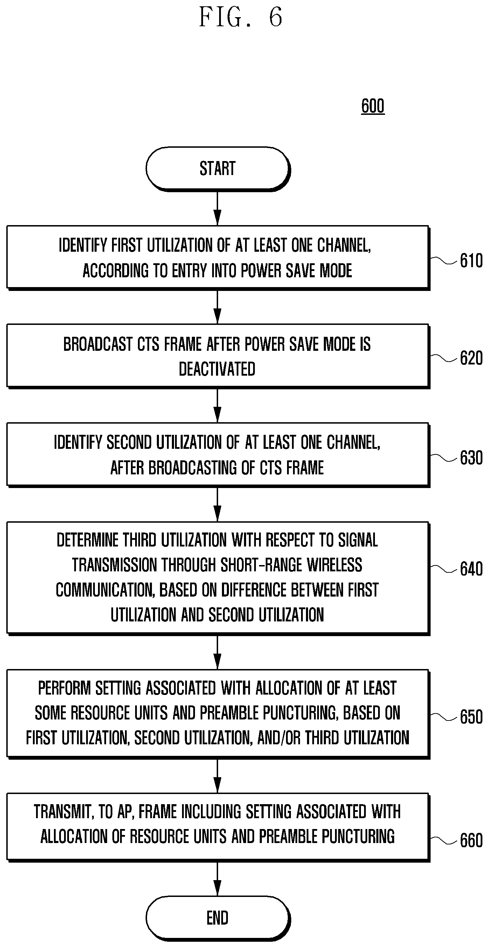

FIG. 6 is an operation flowchart illustrating an operation method 600 of an electronic device according to an embodiment.

In operation 610, the electronic device (e.g., the electronic device 220 in FIG. 3) identifies a first utilization of at least one channel, according to entry into a power save mode.

By measuring the first utilization while the electronic device 220 is in power save mode, the electronic device 220 can passively monitor channel conditions without consuming significant energy. This feature enables the device to gather critical information about network congestion and interference while conserving power, which is particularly beneficial in mobile devices where battery life is a key consideration. The collected data allows the device to make more informed decisions about resource allocation when it reactivates its communication circuits.

The electronic device 220 may identify a utilization of each of at least one channel which may be provided by an AP (e.g., the AP 210 in FIG. 2A). The utilization of each of the at least one channel may correspond to a value associated with a length of time for which the electronic device 220 may not transmit data through the at least one channel. According to an embodiment, the utilization of each of the at least one channel may be defined as a ratio of a time (e.g., a busy time) for which a signal transmitted (or received) through the at least one channel is detected to a time (e.g., radio on time) required for identifying a utilization of a channel.

The electronic device 220 may identify the utilization of each of the at least one channel by using at least two methods.

The electronic device 220 may identify a first utilization of at least one channel, according to the communication circuit 310 having entered a power save mode.

The communication circuit 310 may support the power save mode to reduce power consumption caused by performing short-range wireless communication by the communication circuit 310. The communication circuit 310 having activated the power save mode may not perform signal transmission and/or reception through short-range wireless communication to reduce power consumption caused by performing the short-range wireless communication. The electronic device 220 may control the communication circuit 310 to transmit a frame (or a signal or a message) indicating activation of the power save mode to the AP 210 to cause the communication circuit 310 to enter the power save mode. According to an embodiment, the electronic device 220 may configure a power management bit included in a QoS null frame as 1 (information indicating activation of the power save mode) and control the communication circuit 310 to transmit the QoS null frame to the AP 210.

The electronic device 220 may identify a first utilization of at least one channel, according to the communication circuit 310 having entered the power save mode. The electronic device 220 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the first utilization.

In case that the communication circuit 310 enters the power save mode, the communication circuit 310 may not transmit a signal through the short-range wireless communication. Therefore, the first utilization may correspond to a utilization by a signal transmitted by other STAs (e.g., the second electronic device 230 and/or the third electronic device 240 in FIG 2A), excluding the electronic device 220, connected to the AP 210 and a signal through wireless communication (e.g., Bluetooth or cellular wireless communication) other than the short-range wireless communication.

In operation 620, the electronic device 220 broadcasts a CTS frame after the power save mode is deactivated.

The CTS frame broadcast by the electronic device 220 in normal mode ensures that the device can assess channel conditions without interference from other devices. By reserving the channel, the device can accurately measure the second utilization, which is critical for avoiding data collisions and ensuring reliable communication with the AP 210. This technique enhances the overall performance of the device by optimizing the communication channels based on real-time congestion data.

The electronic device 220 may identify a second utilization corresponding to a utilization by a signal in wireless communication other than the short-range wireless communication. According to an embodiment, the electronic device 220 may release the power save mode (or deactivate the power save mode) and then transmit (or broadcast) the clear-to-send frame (CTS). The CTS frame may correspond to a frame indicating that data (or frame, signal, or message) transmission is possible. The CTS may include information (e.g., identification information of the electronic device 220) indicating an electronic device capable of performing data transmission and information indicating a length of a time for which electronic devices are required to stop data transmission.

Among the electronic devices having received the CTS frame, electronic devices excluding an electronic device corresponding to a destination of the CTS frame may not transmit data to the AP 210 for a designated time.

According to an embodiment, the CTS frame transmitted by the electronic device 220 may correspond to a CTS frame in which identification information of the electronic device 220 in included in information indicating electronic device capable of performing data transmission. Accordingly, in case that the electronic device 220 transmits the CTS frame, other electronic devices (e.g., the second electronic device 230 and/or the third electronic device 240 in FIG 2A) excluding the electronic device 220 may not transmit data to the AP 220 for the designated time included in the CTS frame.

In operation 630, the electronic device 220 identifies the second utilization of at least one channel, after broadcasting the CTS frame.

The second utilization is measured after the electronic device 220 broadcasts a CTS frame, allowing the device to assess channel conditions without interference from other devices. This measurement captures the background noise and interference present in the channel, giving the device a more accurate picture of channel congestion. This enables the device to make more precise decisions regarding resource allocation and preamble puncturing, ensuring that data transmissions occur on the most efficient channels.

The electronic device 220 may identify the second utilization of at least one channel, after transmitting the CTS frame. The electronic device 220 may identify a time (e.g., a busy time) for which a signal transmitted (or received) through at least one channel is detected and a time (e.g., radio on time) required for identifying a utilization of the channel and calculate (or identify or determine) a ratio of the time (e.g., a busy time) for which a signal transmitted (or received) through at least one channel is detected to a time (e.g., radio on time) required for identifying a utilization of the channel, as the second utilization.

After the communication circuit 310 has transmitted the CTS frame, the second electronic device 230 and/or the third electronic device 240 may not transmit a signal through the short-range wireless communication. Therefore, the second utilization may correspond to a utilization by a signal through wireless communication (e.g., Bluetooth or cellular wireless communication) other than the short-range wireless communication.

In operation 640, the electronic device 220 determines a third utilization for signal transmission through the short-range wireless communication, based on a difference between the first utilization and the second utilization.

The third utilization is determined based on the difference between the first utilization and second utilization, allowing the electronic device 220 to isolate the impact of short-range wireless communication on the channel. By analyzing the change in channel conditions during passive and active states, the device can fine-tune its resource allocation and avoid congested frequencies. This dynamic adjustment enhances communication efficiency by ensuring that the device uses channels that are less impacted by external interference.

The operation in which the electronic device 220 identifies the first utilization and/or the second utilization may be to identify a third utilization which corresponding to a utilization by a signal transmitted (or received) through the short-range wireless communication. The first utilization may correspond to a utilization by a signal through the short-range wireless communication and/or a signal through wireless communication other than the short-range wireless communication, and the second utilization may correspond to a utilization by a signal through wireless communication other than the short-range wireless communication. Therefore, a difference between the first utilization and the second utilization may refer to a utilization of a channel by a signal through the short-range wireless communication.

The electronic device 220 may determine (or identify or calculate) the third utilization corresponding to a channel utilization by a signal transmitted and/or received through the short-range wireless communication, based on the difference between the first utilization and the second utilization.

The electronic device 220 may identify the first utilization, the second utilization, and/or the third utilization of each of the at least one channel which may be provided by the AP 210. The electronic device 220 may identify the first utilization, the second utilization, and/or the third utilization and manage the identified utilizations through various methods.

In operation 650, the electronic device 220 performs a setting associated with the allocation of at least some resource unit and the preamble puncturing, based on the first utilization, the second utilization, and/or the third utilization.

The electronic device 220 performs a setting that dynamically adjusts resource unit allocation or preamble puncturing based on the first utilization, second utilization, and third utilization. This adaptive process allows the device to allocate frequency resources more efficiently, avoiding congested channels and improving overall data throughput. By utilizing preamble puncturing, the device can selectively skip over congested frequency bands, ensuring that the communication remains reliable even in noisy environments.

The electronic device 220 may perform the setting associated with an allocation function (or a multi resource unit (MRU) function) of some resource units among multiple resource units and/or the preamble puncturing function, based on the first utilization, the second utilization, and/or the third utilization.

According to an embodiment, the electronic device 220 may perform the setting associated with an allocation function of some resource units among multiple resource units, based on the third utilization (or with reference to the third utilization).

The electronic device 220 may identify a channel having a utilization greater than or equal to (or exceeding) a designated value (e.g., 60%) among third utilizations for at least one channel (e.g., a first channel, a second channel, and a third channel), and perform a setting associated with the allocation function of at least some source units among multiple resource units so that the electronic device 220 may perform data transmission and/or reception through other channels excluding the identified channel.

For example, the electronic device 220 may identify a channel having a utilization greater than or equal to (or exceeding) a designated value (e.g., 60%) among third utilizations of at least one channel (e.g., a first channel, a second channel, and a third channel), and perform a setting associated with the allocation function of at least some source units among multiple resource units so that another frequency band excluding a frequency band corresponding to the identified channel is allocated.

The electronic device 220 may identify a channel having a utilization greater than or equal to (or exceeding) a designated value (e.g., 60%) among second utilizations of at least one channel (e.g., a first channel, a second channel, and a third channel), and perform a setting associated with the preamble puncturing so that the electronic device 220 may perform data transmission and/or reception through other channels excluding the identified channel.

The channel having a second utilization greater than or equal to (or exceeding) a designated value may correspond to a channel which may not provide high performance of the short-range wireless communication due to a signal or noise by wireless communication other than the short-range wireless communication. Accordingly, the electronic device 220 may identify the channel having a second utilization greater than or equal to (or exceeding) a designated value and request activation of the preamble puncturing function from the AP 210 to allow the short-range wireless communication through another frequency band excluding a frequency band corresponding to the identified channel.

The electronic device 220 may perform a setting associated with the preamble puncturing function. The setting associated with the preamble puncturing function may include setting whether the preamble puncturing function is activated and/or setting a frequency band to be excluded when the preamble puncturing function is activated.

In operation 660, the electronic device 220 transmits, to the AP 210, a frame including the setting associated with performing of the allocation of resource unit and the preamble puncturing.

The electronic device 220 transmits the frame to the AP 210 including settings for resource unit allocation and/or preamble puncturing, based on the first utilization, second utilization, and third utilization. This frame enables the AP 210 to adjust its allocation of frequency resources, ensuring that communication between the device and the network is optimized for current congestion conditions. By continuously updating the AP 210, the system ensures that data transmission remains efficient and that available resources are used to their fullest potential.

The electronic device 220 may perform the setting associated with the allocation function of at least some source units and control the communication circuit 310 to transmit, to the AP 210, a frame including the setting associated with the allocation of resource units. The frame including the setting associated with the allocation of source units may be realized as a frame (e.g., an operation mode indication (OMI) or operation mode notification (OMN)) configured to request changing of an operation mode of the short-range wireless communication. The setting associated with the allocation of source units may include information of resource units (or frequency bands) which the electronic device 220 needs to avoid allocating. According to an embodiment, the setting associated with the allocation of source units may include information indicating a channel having a utilization greater than or equal to (or exceeding) a designated value (e.g., 60%) among third utilizations of at least one channel (e.g., a first channel, a second channel, and a third channel) or information indicating a frequency band of the channel.

The electronic device 220 may use a method of transmitting a frame including the setting associated with the allocation of source units to the AP 210 so as to induce other resource units excluding the identified resource unit to be allocated to the electronic device 220. The electronic device 220 may cause the AP 210 to allocate other resource units excluding the identified resource unit (e.g., the resource unit having the third utilization having a value greater than or equal to a designated value) to the electronic device 220 so as to allow the electronic device 220 to perform the short-range wireless communication by using a resource unit having relatively better performance, thus improving performance of the short-range wireless communication.

The electronic device 220 may perform the setting associated with the preamble puncturing function and control the communication circuit 310 to transmit, to the AP 210, a frame including the setting associated with the preamble puncturing function. The frame including the setting associated with the preamble puncturing function may be realized as a frame (e.g., an operation mode indication (OMI) or operation mode notification (OMN)) configured to request changing of an operation mode of the short-range wireless communication.

The electronic device 220 may use a method of transmitting a frame including the setting associated with the preamble puncturing function to the AP 210 so as to induce data transmission and/or reception to be performed through another frequency band other than the identified frequency band. In case that the AP 210 receives the frame including the setting associated with the preamble puncturing function and the preamble puncturing function is activated, the electronic device 220, the second electronic device 230, and/or the third electronic device 240 may transmit and/or receive data to and/or from the AP 210 through another frequency band other than the identified frequency band. Therefore, the electronic device 220 may perform the short-range wireless communication through another frequency band excluding the identified frequency band (e.g., the frequency band corresponding to the resource unit having the second utilization greater than or equal to a designated value) to allow the electronic device 220 to perform the short-range wireless communication by using a resource unit having relatively better performance, thus improving performance of the short-range wireless communication.

An electronic device 220 according to an embodiment includes a communication circuit 310 configured to exchange data with an AP 210 through short-range wireless communication. The electronic device 220 includes a processor 320. The electronic device 220 includes a memory 330. The memory 330 stores an instruction, when executed by the processor 320, causing the electronic device 220 to identify a first utilization of at least one channel, according to entry into a power save mode. The memory 330 stores an instruction to broadcast a clear-to-send (CTS) frame after the power save mode is released. The memory 330 stores an instruction to identify a second utilization of the at least one channel, after the broadcasting of the CTS frame. The memory 330 stores an instruction to, based on a difference between the first utilization and the second utilization, determine a third utilization of the at least one channel, caused by signal transmission and/or reception through the short-range wireless communication. The memory 330 stores an instruction to transmit, to the AP (210), a frame including a setting associated with allocation of at least some resource units among multiple resource units and/or preamble puncturing, wherein the setting is set based on the first utilization, the second utilization, and/or the third utilization.

In the electronic device 220 according to an embodiment, the memory 330 may store an instruction, when executed by the processor 320, causing the electronic device 220 to identify a channel having a channel utilization greater than or equal to a designated value from among the at least one channel, based on the third utilization. The memory 330 may store an instruction to, in case that among the at least one channel, the channel having a channel utilization greater than or equal to the designated value exists, perform the setting associated with the allocation of the at least some resource units, so that the electronic device performs the short-range wireless communication through a channel having a channel utilization smaller than or equal to the designated value from among the at least one channel.

In the electronic device 220 according to an embodiment, the memory 330 may further store an instruction, when executed by the processor 320, causing the electronic device 220 to transmit, to the AP 210, a frame including a setting indicating a channel having a channel utilization smaller than or equal to a designated value among the at least one channel and associated with the allocation of the at least some resource units.

In the electronic device 220 according to an embodiment, the memory 330 may store an instruction, when executed by the processor 320, causing the electronic device 220 to identify a channel having a channel utilization greater than or equal to a designated value from among the at least one channel, based on the second utilization. The memory 330 may further store an instruction causing the electronic device to perform the setting associated with the preamble puncturing so that the electronic device does not perform the short-range wireless communication through the identified channel.

In the electronic device 220 according to an embodiment, the memory 330 may further store an instruction, when executed by the processor 320, causing the electronic device 220 to transmit, to the AP 210, a frame including a setting indicating the identified channel and associated with the preamble puncturing.

In the electronic device 220 according to an embodiment, the memory 330 may store an instruction, when executed by the processor 320, causing the electronic device 220 to transmit, to the AP (210), a frame indicating entry into the power save mode and then enter the power save mode. The memory 330 may further store an instruction to, according to the entry into the power save mode, identify the first utilization while no data is transmitted to the AP 210.

In the electronic device 220 according to an embodiment, the first utilization may be determined based on a degree of utilization of the at least one channel by signal transmission through the short-range wireless communication and signal transmission through another wireless communication.

In the electronic device 220 according to an embodiment, the memory 330 may further store an instruction, when executed by the processor 320, causing the electronic device to broadcast the CTS frame and then identify the second utilization while at least one external electronic device 230 or 240 connected to the AP 210 transmits no data.

In the electronic device 220 according to an embodiment, the second utilization may be determined based on a degree of utilization of the at least one channel according to signal transmission through the short-range wireless communication and another wireless communication.

In the electronic device 220 according to an embodiment, the frame including the setting associated with performing of the allocation of at least some resource units and/or the preamble puncturing may be included in an operation mode indication (OMI) frame or an operation mode notification (OMN) frame.

An operation method of an electronic device according to an embodiment includes an operation of identifying a first utilization of at least one channel, according to entry into a power save mode. The operation method of the electronic device includes an operation of broadcasting a clear-to-send (CTS) frame after the power save mode is deactivated. The operation method of the electronic device includes an operation of identifying a second utilization of the at least one channel, after the broadcasting of the CTS frame. The operation method of the electronic device includes an operation of determining a third utilization for signal transmission through the short-range wireless communication, based on a difference between the first utilization and the second utilization. The operation method of the electronic device includes an operation of performing a setting associated with allocation of at least some resource units among multiple resource units and/or preamble puncturing, based on the first utilization, the second utilization, and/or the third utilization. The operation method of the electronic device includes an operation of transmitting a frame including the setting associated with the allocation of at least some resource units and/or the preamble puncturing to the AP 210 connected to electronic device 220.

In the operation method of the electronic device, the operation of performing the setting associated with allocation of at least some resource units and/or the preamble puncturing may include an operation of identifying a channel having a channel utilization greater than or equal to a designated value from among the at least one channel, based on the third utilization. The operation of performing the setting associated with allocation of at least some resource units and/or preamble puncturing may include an operation of, in case that among the at least one channel, the channel having a channel utilization greater than or equal to the designated value exists, performing the setting associated with the allocation of the at least some resource units so as to allow the short-range wireless communication to be performed through a channel having a channel utilization smaller than or equal to a designated value from among the at least one channel.

The operation method of the electronic device according to an embodiment may include an operation of transmitting, to the AP 210, a frame including the setting indicating a channel having a channel utilization smaller than or equal to a designated value among the at least one channel and associated with the allocation of the at least some resource units.

In the operation method of the electronic device according to an embodiment, the operation of performing the setting associated with allocation of at least some resource units and/or preamble puncturing may include an operation of identifying a channel having a channel utilization greater than or equal to a designated value from among the at least one channel, based on the second utilization. The operation of performing the setting associated with allocation of at least some resource units and/or preamble puncturing may include an operation of performing the setting associated with the preamble puncturing to cause the short-range wireless communication not to be performed through the identified channel.

The operation method of the electronic device according to an embodiment may further include an operation of transmitting, to the AP 210, a frame including the setting indicating the identified channel and associated with the preamble puncturing.

In the operation method of the electronic device, the operation of identifying the first utilization of the at least one channel may include an operation of transmitting, to the AP 210, a frame indicating entry into the power save mode and then entering the power save mode. The operation of identifying the first utilization of the at least one channel may include an operation of, according to the entry into the power save mode, identifying the first utilization while no data is transmitted to the AP 210.

In the operation method of the electronic device according to an embodiment, the first utilization may be determined based on a degree of utilization of the at least one channel according to signal transmission through the short-range wireless communication and signal transmission through another wireless communication.

In the electronic device according to an embodiment, the operation of identifying the second utilization of the at least one channel may include an operation of broadcasting the CTS frame and then identify the second utilization while at least one external electronic device 230 or 240 connected to the AP 210 transmits no data.

In the operation method of the electronic device 220 according to an embodiment, the second utilization may be determined based on a degree of utilization of the at least one channel by signal transmission through the short-range wireless communication and through another wireless communication.

In the operation method of the electronic device according to an embodiment, the frame including the setting associated with performing of the allocation of at least some resource units and/or the preamble puncturing may be included in an operation mode indication (OMI) frame or an operation mode notification (OMN) frame.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (220) comprising:
a communication circuit (310) configured to exchange data with an access point, AP (210), through short-range wireless communication;
a processor (320); and
memory (330),
wherein the memory (330) is configured to store instructions, when executed by the processor (320), causing the electronic device (220) to:
identify a first utilization of at least one channel while the electronic device (220) is in a power save mode;
broadcast a clear-to-send (CTS) frame while the electronic device (220) is in a normal mode;
after the broadcasting of the CTS frame, identify a second utilization of each of the at least one channel;
determine a third utilization of the at least one channel, caused by signal transmission and/or reception through the short-range wireless communication, based on a difference between the first utilization and the second utilization; and
transmit, to the AP (210), a frame comprising a setting set based on the first utilization, the second utilization, and/or the third utilization and associated with allocation of at least some resource units among multiple resource units and/or preamble puncturing.

2. The electronic device of claim 1, wherein the memory (330) is configured to store instructions, when executed by the processor (320), causing the electronic device (220) to:
identify a channel having a channel utilization greater than or equal to a designated value from among the at least one channel, based on the third utilization; and
in case that among the at least one channel, the channel having a channel utilization greater than or equal to the designated value exists, perform the setting associated with the allocation of the at least some resource units, so that the electronic device performs the short-range wireless communication through a channel having a channel utilization smaller than or equal to the designated value among the at least one channel.

3. The electronic device of claim 2, wherein the memory (330) is configured to further store an instruction, when executed by the processor (320), causing the electronic device (220) to transmit a frame comprising a setting associated with the allocation of the resource units to the AP (210), the setting indicating a channel having a channel utilization smaller than or equal to a designated value among the at least one channel.

4. The electronic device of claim 1, wherein the memory (330) is configured to store instructions, when executed by the processor (320), causing the electronic device (220) to:
identify a channel having a channel utilization greater than or equal to a designated value from among the at least one channel, based on the second utilization; and
perform a setting associated with the preamble puncturing so that the electronic device does not perform the short-range wireless communication through the identified channel.

5. The electronic device of claim 4, wherein the memory (330) is configured to further store an instruction, when executed by the processor (320), causing the electronic device (220) to transmit, to the AP (210), a frame comprising a setting indicating the identified channel and associated with the preamble puncturing.

6. The electronic device of any one of claims 1 to 5, wherein the memory (330) is configured to store instructions, when executed by the processor (320), causing the electronic device (220) to:
transmit, to the AP (210), a frame indicating entry into the power save mode and then enter the power save mode; and
according to the entry into the power save mode, identify the first utilization while the electronic device transmits no data to the AP (210).

7. The electronic device of any one of claims 1 to 6, wherein the first utilization is determined based on a degree of utilization of the at least one channel by signal transmission through the short-range wireless communication and signal transmission through another wireless communication.

8. The electronic device of any one of claims 1 to 7, wherein the memory (330) is configured to store an instruction, when executed by the processor (320), causing the electronic device to, after the broadcasting of the CTS frame, identify the second utilization while at least one external electronic device (230, 240) connected to the AP (210) transmits no data.

9. The electronic device of any one of claims 1 to 8, wherein the second utilization is determined based on a degree of utilization of the at least one channel according to signal transmission through the short-range wireless communication and another wireless communication.

10. The electronic device of any one of claims 1 to 9, wherein the frame comprising the setting associated with performing of the allocation of the resource units and/or the preamble puncturing is included in an operation mode indication, OMI, frame or an operation mode notification, OMN, frame.

11. An operation method of an electronic device (220), the method comprising:
identifying (610) a first utilization of at least one channel while the electronic device (220) is in a power save mode;
broadcasting (620) a clear-to-send, CTS, frame while the electronic device (220) is in a normal mode;
after the broadcasting of the CTS frame, identifying (630) a second utilization of each of the at least one channel;
determining (640) a third utilization by signal transmission through the short-range wireless communication, based on a difference between the first utilization and the second utilization;
performing (650) a setting associated with allocation of at least some resource units among multiple resource units and/or preamble puncturing, based on the first utilization, the second utilization, and/or the third utilization; and
transmitting (660) a frame comprising a setting associated with performing of the allocation of the resource units and/or the preamble puncturing to an access point, AP (210), connected to the electronic device (220).

12. The method of claim 11, wherein the performing of the setting associated with the allocation of at least some resource units and/or the preamble puncturing comprises:
identifying a channel having a channel utilization greater than or equal to a designated value from among the at least one channel, based on the third utilization; and
in case that among the at least one channel, the channel having a channel utilization greater than or equal to the designated value exists, performing a setting associated with the allocation of the at least some resource units so as to allow the short-range wireless communication to be performed through a channel having a channel utilization smaller than or equal to a designated value from among the at least one channel.

13. The method of claim 11, wherein the performing of the setting associated with the allocation of at least some resource units and/or the preamble puncturing comprises:
identifying a channel having a channel utilization greater than or equal to a designated value from among the at least one channel, based on the second utilization; and
performing a setting associated with the preamble puncturing to cause the short-range wireless communication not to be performed through the identified channel.

14. The method of any one of claims 11 to 13, wherein the identifying of the first utilization of the at least one channel comprises:
transmitting, to the AP (210), a frame indicating entry into the power save mode and then entering the power save mode; and
according to the entry into the power save mode, identifying the first utilization while no data is transmitted to the AP (210).

15. The method of any one of claims 11 to 14, wherein the identifying of the second utilization of each of the at least one channel comprises, after the broadcasting (620) of the CTS frame, identifying the second utilization while at least one external electronic device (230, 240) connected to the AP (210) transmits no data, and.
wherein the second utilization is determined based on a degree of utilization of the at least one channel by signal transmission through the short-range wireless communication and another wireless communication.
